(19) Europäisches Patentamt
European Patent Office
Office européen des brevets

(11) EP 1 844 102 B1

(12) EUROPÄISCHE PATENTSCHRIFT

(45) Veröffentlichungstag und Bekanntmachung des Hinweises auf die Patenterteilung:
**18.09.2013 Patentblatt 2013/38**

(21) Anmeldenummer: **05819269.1**

(22) Anmeldetag: **15.12.2005**

(51) Int Cl.:
***C08L 33/04*** *(2006.01)*

(86) Internationale Anmeldenummer:
**PCT/EP2005/013514**

(87) Internationale Veröffentlichungsnummer:
**WO 2006/079394 (03.08.2006 Gazette 2006/31)**

(54) **SCHLAGZÄHE POLY(METH)ACRYLAT-FORMMASSE MIT HOHER WÄRMEFORMBESTÄNDIGKEIT**

IMPACT-RESISTANT POLY(METH)ACRYLATE MOULDING MASSES WITH HIGH THERMAL STABILITY

MATIERE MOULABLE POLY(METH)ACRYLATE RESISTANTE AUX CHOCS A THERMOSTABILITE ELEVEE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.01.2005 DE 102005003302**

(43) Veröffentlichungstag der Anmeldung:
**17.10.2007 Patentblatt 2007/42**

(73) Patentinhaber: **Evonik Röhm GmbH**
**64293 Darmstadt (DE)**

(72) Erfinder:
- **SCHULTES, Klaus**
  **65193 Wiesbaden (DE)**
- **ALBRECHT, Klaus**
  **55129 Mainz (DE)**
- **REINHEIMER, Eric**
  **64846 Gross-Zimmern (DE)**
- **GOLDACKER, Thorsten**
  **64380 Rossdorf (DE)**
- **HOESS, Werner**
  **Luoxiu Road,**
  **200237 Shanghai (CN)**
- **WICKER, Michael**
  **64342 Seeheim-Jugenheim (DE)**
- **HALBLÄNDER, Tony**
  **64347 Griesheim (DE)**

(74) Vertreter: **Wolf, Oliver**
**Evonik Industries AG**
**Intellectual Property Management**
**Rodenbacher Chaussee 4**
**63457 Hanau-Wolfgang (DE)**

(56) Entgegenhaltungen:
**WO-A-2004/056892**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 844 102 B1

## Beschreibung

Die Erfindung betrifft eine schlagzähe Poly (meth) acrylat- Formmasse (PMMA- Formmasse) mit hoher Wärmeformbeständigkeit sowie deren Verwendung für Spritzgussteile.

## Stand der Technik

Ausgehend von der Forderung nach zunehmend geringerem Kraftstoffverbrauch ist die Automobilindustrie bestrebt, das Eigengewicht von Kraftfahrzeugen immer weiter zu verringern. Während in der Vergangenheit weitestgehend Stahlteile im Kfz-Außenbereich verbaut wurden, besteht aus ökonomischen Gründen der Wunsch, diese Elemente aus Werkstoffen mit geringerer Dichte bei gleichzeitig verringertem Fertigungsaufwand herstellen zu wollen.

Das Eigenschaftsprofil dieser Formteile ist bestimmt durch ein geringes Eigengewicht bei gleichzeitig hoher Witterungsbeständigkeit, hoher Steifigkeit, guter Schlagzähigkeit, guter Maßhaltigkeit insbesondere auch bei Erwärmung im Dauergebrauchstemperaturbereich, guter Chemikalienresistenz z. B. gegen Reinigungsmittel, guter Kratzfestigkeit und hohem Glanz.

Neben dem Defizit des Eigengewichts von Stahlblech besteht bei Einsatz dieses Werkstoffes weiterhin der Nachteil, dass die Formteile einer der Fertigung nachfolgenden Lackierung unterworfen werden müssen, um eine "Class A - Oberfläche" zu erzielen. Zur Gewichtsabsenkung werden deshalb die Stahlbauteile zunehmend durch Kunststoffbauteile ersetzt, wobei gleichzeitig dem Wunsch der Kfz-Designer nach höheren gestalterischen Freiheitsgraden hinsichtlich der Bauteilgeometrie Rechnung getragen wird.

Anwendung in diesem Bereich fanden bislang verschiedene Thermoplaste wie z. B. Polycarbonat (PC), ASA, ASA/PC, PMMA und glasfasergefüllte Polymere wie z. B. GF-Polyamid Verwendung.

Da die Formteile in der Regel mittels Spritzgussverfahren produziert werden, besteht in Anbetracht der Bauteilgeometrie (lange Fließwege bei geringen Schichtdicken) bei Verwendung von Thermoplasten weiterhin die Forderung nach einer guten Fließfähigkeit der Kunststoffschmelze, um Ausschussteile zu vermeiden. Um dem Kfz-Hersteller eine weitgehend freie Farbwahl zu ermöglichen, sollte der Kunststoff außerdem nahezu keine Eigenfarbe bei hoher Lichttransmission besitzen.

Der Einsatz von glasfaserverstärkten Kunststoffen führt zwar zu Formteilen mit gutem mechanischen Eigenschaften, jedoch ist auch hier analog zu Stahl eine nachträgliche Lackierung erforderlich, um eine gleichmäßige, glänzende Class A - Oberflächenqualität zu erreichen.

Polycarbonat besitzt neben hoher Wärmeformbeständigkeit auch eine sehr gute Zähigkeit. Die mangelnde Witterungsbeständigkeit, die zu Vergilbung führt, und die geringe Oberflächenhärte erfordern jedoch auch hier eine Oberflächenlackierung. Weiterhin stellt die nicht ausreichende Steifigkeit dieses Werkstoffs ein Problem für die genannte Anwendung dar.

Eine gegenüber Polycarbonat verbesserte Witterungsbeständigkeit weisen thermoplastische Werkstoffe wie ASA, PMMA und Blends aus ASA mit PC auf. Bei ASA und ASA/PC reichten jedoch die Steifigkeit des Werkstoffs und die Oberflächenhärte, die in einer mangelnden Kratzfestigkeit resultiert, nicht aus, um den Anforderungen an die genannten Bauteile zu genügen. Bei PMMA handelt es sich um einen Werkstoff, der eine hervorragende Witterungsbeständigkeit und optische Güte bei hoher Steifigkeit, hoher Oberflächenhärte, guter Wärmeformbeständigkeit und guter Schmelzefließfähigkeit besitzt. Für die genannte Anwendung ist jedoch die Zähigkeit von PMMA zu gering. Um dieses Defizit auszugleichen, kann PMMA durch Abmischung mit Schlagzähmodifikatoren, die aus dem Stand der Technik bekannt sind, optimiert werden. Durch diese Modifikation wird jedoch die Wärmeformbeständigkeit und Oberflächenhärte derart verringert, dass auch schlagzähmodifiziertes PMMA den Anforderungen nicht genügt.

Es ist eine Vielzahl handelsübliche Formmassen auf Polymethyl(meth)acrylatBasis mit guten Materialeigenschaften bekannt.

## Aufgabe und Lösung

Viele handelsübliche Formmassen auf Polymethyl (meth) acrylat- Basis weisen an sich bereits sehr befriedigende Materialeigenschaften auf, haben jedoch den Nachteil, dass ein Eigenschaftsprofil, welches für die Herstellung von qualitativ hochwertigen Spitzgussteilen, z. B. für Automobilaußenteile, gefordert wird, kaum in allen einzelnen Anforderungen gleichermaßen erreicht wird. Dies schränkt die Möglichkeiten der Verwendung solcher Teile bisher sehr ein. Da die Formkörper sehr oft dunkel gedeckt eingefärbt sind, werden diese durch die Sonnenstrahlung stark aufgeheizt. Daher ist eine zusätzliche Anforderung an die PMMA- Formmasse eine hohe Wärmeformbeständigkeit, damit die entsprechenden Klimatests des Formkörpers bestanden werden. Der Formkörper darf dabei nicht erweichen. Daneben müssen die Formkörper oft schlagzäh sein. Die Erfüllung dieser Anforderungen ist sowohl für den Einbau der Formkörper am Automobil als auch aufgrund der mechanischen Dauerbelastung während der Automobil- Lebenszeit (Steinschlag, Witterungseinflüsse) notwendig. Weiterhin müssen die bekannt guten Eigenschaften wie die Verarbeitbarkeit und die

Mechanik, bestehen bleiben. Die Aufgabe der vorliegenden Erfindung bestand somit in der Bereitstellung eines thermoplastischen Werkstoffs mit ausgewogenem Eigenschaftsprofil, der die oben aufgezeigten Nachteile nicht aufweist.

Die Aufgabe wird gelöst durch eine Polymermischung gemäß den Ansprüchen.

## Ausführung der Erfindung

### Die Polymermischung

Die Erfindung betrifft eine Polymermischung, die die Komponenten a.), b.) sowie c.) und/oder d.) enthält. Die Polymermischung kann somit entweder aus den Komponenten a.), b.) und c.), oder aus den Komponenten a.), b.) und d). oder aus allen vier Komponenten bestehen. Die Komponenten a.), b.), c.) und/oder d.) können jeweils für sich als einzelne Polymere als auch als Mischung mehrerer Polymere der entsprechenden Definition vorliegen.

### Eigenschaften der Polymermischung

Die Komponenten a.), b.) sowie c.) und/oder d.) sind in den Mengenanteilen und in ihrer Zusammensetzung so gewählt, dass ein aus der Polymermischung hergestellter Probekörper gleichzeitig folgende Eigenschaften aufweist:

- ein Zugmodul (ISO 527) von mindestens 2.500, bevorzugt mindestens 2.600, besonders bevorzugt mindestens 2.700 oder 2.800 MPa,
- eine Vicaterweichungstemperatur VET (ISO 306-B50) von mindestens 110, bevorzugt mindestens 111, insbesondere mindestens 112, z. B. von 110 bis 125 °C,
- eine Schlagzähigkeit SZ (ISO 179, edgewise) von mindestens 30, bevorzugt mindestens 32, 34, 37 oder 40 $kJ/m^2$
- einen Schmelzindex MVR (ISO 1133, 230 °C / 3,8 kg) von mindestens 1,0, bevorzugt mindestens 1,2, 1,5 oder 2,0 $cm^3/10$ min.

Übliche Zusatz, Hilfs- und/oder Füllstoffe sind so zu wählen, daß das oben genannte Eigenschaftsprofil möglichst nicht oder höchstens geringfügig beeinträchtigt wird.

## Weitere Eigenschaften

Die Komponenten a.), b.) sowie c.) und/oder d.) können weiterhin in den Mengenanteilen und in ihrer Zusammensetzung so gewählt werden, dass ein aus der Polymermischung hergestellter Probekörper auch zumindest einige der folgenden Eigenschaften aufweist:

Untersuchung zur Spannungsrissbildung unter Medieneinfluss

Auf eine kreisförmige Biegeschablone mit Radius r wird ein streifenförmiger Probekörper der Dicke d aufgespannt. In der auf Zug belasteten Oberfläche des Probekörpers entsteht dadurch die konstante Randfaserdehnung eps = d/(2r+d). Die Anordnung entspricht dem Aufbau in ISO 4599. Die auf Zug belastete Oberfläche des Probekörpers wird mit dem Medium benetzt. Es wird die Zeit bis zur Entstehung von Rissen gemessen, mittels visueller Beobachtung mit dem unbewaffneten Auge (d.h. ohne Mikroskop o.ä.). Verwendet man verschiedene Schablonen mit unterschiedlichem Radius r, kann man die Zeit bis zur Rissbildung bei unterschiedlichen Randfaserdehnungen ermitteln. Diese sinkt im Allgemeinen bei höherer Randfaserdehnung.
Bruchzeit bei Benetzung der Oberfläche mit Isopropanol bei konstanter Randfaserdehnung von

- 0,39 %: > 1.800 s
- 0,50 %: > 700 s

Bruchzeit bei Benetzung der Oberfläche mit Ethanol/Wasser-Gemisch im Verhältnis 70 : 30 bei konstanter Randfaserdehnung von

- 0,39 %: > 1.800 s
- 0,50 %: > 200 s

Oberflächenhärte

Ritzhärte nach Taber bei einer Auflagekraft von

- 0,7 N: keine Oberflächenbeschädigung detektierbar,
- 1,5 N: < 2,0 µm, bevorzugt < 1,6 µm,
- 3,0 N: < 6 µm, bevorzugt < 5 µm,

Oberflächenglanz

R (60°): > 48 %, bevorzugt > 50 %

**Mengenverhältnisse der Komponenten**

Die Komponenten liegen in folgenden Mengenverhältnissen vor, die sich zu 100 Gew.-% addieren.

Komponente a.) :25 Gew.-%. bis 75 Gew.-%., bevorzugt 40 Gew.-%. bis 60 Gew.-%., insbesondere 45 Gew.-%. bis 57 Gew.-%.
Komponente b.) :7 Gew.-%. bis 60 Gew.-%., bevorzugt 7 Gew.-%. bis 20 Gew.-%.
Komponente c.) und/oder d.): 10 Gew.-%. bis 50 Gew.-%., bevorzugt 12 Gew.-%. bis 44 Gew.-%.

Probekörper mit sehr hohen VET-Werten im Bereich von 116 bis 120 °C können erhalten werden, wenn c.) mit 30 Gew.-%. bis 45 Gew.-%., bevorzugt 35 Gew.-%. bis 40 Gew.-% enthalten ist und d.) bevorzugt nicht enthalten ist.

Probekörper mit hohen VET-Werten, im Bereich von 114 bis 118 °C, können erhalten werden wenn sowohl c.) und d.) enthalten sind, bevorzugt in Mengenanteilen von c.) mit 10 Gew.-%. bis 15 Gew.-% und d.) mit 15 Gew.-%. bis 25 Gew.-%.

Probekörper mit VET-Werten im Bereich von 109 °C bis 113 °C und gleichzeitig geringer Eigenfarbe, können erhalten werden wenn d.) mit 30 Gew.-%. bis 40 Gew.-%., bevorzugt 33 Gew.-%. bis 38 Gew.-% enthalten ist und c.) bevorzugt nicht enthalten ist.

Die Polymermischung kann noch übliche Zusatz, Hilfs- und/oder Füllstoffe enthalten.

**Herstellung der Polymermischung**

Die Polymermischung kann durch trockenes Abmischen der Komponenten, die als Pulver, Körner oder bevorzugt Granulate vorliegen können, hergestellt werden.

Die Polymermischung kann auch durch Schmelzen und Vermengen der Einzelkomponenten im Schmelzezustand oder durch Schmelzen trockener Vormischungen der Einzelkomponenten zu einer gebrauchsfertigen Formmasse verarbeitet werden erfolgen. Dies kann z. B. in Ein- oder Zweischneckenextrudern erfolgen. Das erhaltene Extrudat kann anschließend granuliert werden. Übliche Zusatz, Hilfs- und/oder Füllstoffe können direkt zugemischt oder später von Endverbraucher nach Bedarf zugegeben werden.

**Komponente a.)**

Die Komponente a.) ist ein niedermolekulares (Meth) acrylat (co) polymer, charakterisiert durch eine Lösungsviskosität in Chloroform bei 25 °C (ISO 1628- Teil 6) von kleiner/ gleich 55, bevorzugt kleiner/ gleich 50, insbesondere 45 bis 55 ml/g.

Dies kann einem Molekulargewicht $M_w$ (Gewichtsmittel) von 95.000 g/mol (Bestimmung von $M_w$ mittels Gelpermeationschromatographie unter Bezug auf Polymethylmethacrylat als Eichstandard) entsprechen. Die Bestimmung des Molekulargewichts Mw kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Die Komponente a.) ist ein Copolymer aus Methylmethacrylat, Styrol und Maleinsäureanhydrid.

Geeignete Mengenanteile können z. B. sein:

50 Gew.-%. bis 90 Gew.-%., bevorzugt 70 Gew.-%. bis 80 Gew.-% Methylmethacrylat,
10 Gew.-%. bis 20 Gew.-%., bevorzugt 12 Gew.-%. bis 18 Gew.-% Styrol und
5 Gew.-%. bis 15 Gew.-%., bevorzugt 8 Gew.-%. bis 12 Gew.-% Maleinsäureanhydrid.

Entsprechende Copolymere können in sich bekannter Weise durch radikalische Polymerisation erhalten werden. EP-A 264 590 beschreibt z. B. ein Verfahren zur Herstellung einer Formmasse aus einem Monomerengemisch aus Methylmethacrylat, Vinylaromat, Maleinsäureanhydrid sowie gegebenenfalls aus einem niederen Alkylacrylat, bei dem die Polymerisation bis zu einem Umsatz von 50 % in An- oder Abwesenheit eines nicht polymerisierbaren organischen Lösungsmittels durchgeführt wird und bei dem die Polymerisation ab einem Umsatz von mindestens 50 % im Temperaturbereich von 75 bis 150 °C in Gegenwart eines organischen Lösungsmittels bis zu einem Umsatz von mindestens 80 % fortgesetzt wird und anschließend die niedermolekularen flüchtigen Bestandteile verdampft werden.

In JP-A 60-147 417 wird ein Verfahren zur Herstellung einer hochwärmeformbeständigen Polymethacrylat-Formmasse beschrieben, bei dem eine Monomermischung aus Methylmethacrylat, Maleinsäureanhydrid und mindestens einem Vinylaromaten in einen Polymerisationsreaktor, der für Lösungs- oder Massepolymerisation geeignet ist, bei einer Temperatur von 100 bis 180 °C eingespeist und polymerisiert wird. DE-OS 44 40 219 beschreibt ein weiteres Herstellungsverfahren.

Die Komponente a.) kann z. B. hergestellt werden, indem man eine Monomermischung aus z. B. 6355 g Methylmethacrylat, 1271 g Styrol und 847 g Maleinsäureanhydrid mit 1, 9 g tert.- Butylperneodecanoat und 0, 85 g tert.- Butylperoxi- 3, 5, 5- trimethylhexanoat als Polymerisationsinitiator und 19, 6 g 2- Mercaptoethanol als Molekulargewichtsregler sowie mit 4, 3 g Palmitinsäure versetzt. Das resultierende Gemisch kann in eine Polymerisationskammer gefüllt und z. B. 10 Minuten entgast werden. Danach kann im Wasserbad z. B. 6 Stunden bei 60°C, nachfolgend 30 Stunden bei 55°C Wasserbadtemperatur polymerisiert werden. Nach etwa 30 Stunden erreicht das Polymerisationsgemisch mit etwa 126°C seine Maximaltemperatur. Nach Entfernung der Polymerisationskammer aus dem Wasserbad wird das Polymerisat entsprechend der Komponente a) in der Polymerisationskammer noch etwa 7 Stunden z. B. bei 117°C im Luftschrank getempert.

**Komponente b.)**

Die Komponente b) ist ein Schlagzähmodifizierungsmittel auf Basis von vernetzten Poly(meth)acrylaten und weist einen Kern / Schale / Schale Aufbau auf.

Schlagzähmodifizierungsmittel für Polymethacrylat-Kunststoffe sind hinlänglich bekannt. Herstellung und Aufbau von schlagzähmodifizierten Polymethacrylat-Formmassen sind z. B. in EP-A 0 113 924, EP-A 0 522 351, EP-A 0 465 049 EP-A 0 683 028 und US 3,793,402 beschrieben

Bevorzugte Schlagzähmodifizierungsmittel sind Polymerisatteilchen, die einen Kern- Schale- Schale- Aufbau aufweisen und durch Emulsionspolymerisation erhalten werden können (s. z. B. EP- A 0 113 924, EP- A 0 522 351, EP- A 0 465 049 und EP- A 0 683 028) . Typische Teilchengrößen (Durchmesser) dieser Emulsionspolymerisate liegen im Bereich von 100- 600 nm, bevorzugt 200- 500 nm.

Ein dreischichtiger bzw. dreiphasiger Aufbau mit einem Kern und zwei Schalen kann wie folgt beschaffen sein. Eine innerste (harte) Schale kann z. B im wesentlichen aus Methylmethacrylat, geringen Anteilen von Comonomeren, wie z. B. Ethylacrylat und einem Vernetzeranteil, z. B. Allylmethacrylat, bestehen. Die mittlere (weiche) Schale kann z. B. aus Butylacrylat und Styrol aufgebaut sein, während die äußerste (harte) Schale im wesentlichen meist dem Matrixpolymerisat entspricht, wodurch die Verträglichkeit und gute Anbindung an die Matrix bewirkt wird.

Dabei bezeichnen im Rahmen der vorliegenden Erfindungen die Schreibweise "(Meth)acrylate" Acrylate, Methacrylate sowie Mischungen aus beiden. Sie umfassen somit Verbindungen, welche mindestens eine Gruppe der folgenden Formel aufweisen

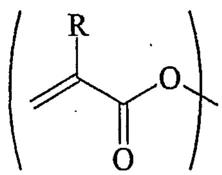

wobei R Wasserstoff oder einen Methylrest kennzeichnet. Zu ihnen gehören insbesondere Alkylacrylate und/oder Alkylmethacrylate.

Vorzugsweise umfasst der **Kern**, jeweils bezogen auf sein Gesamtgewicht,

A)50,0 Gew.-%. bis 99,9 Gew.-%, zweckmäßigerweise 60,0 Gew.-%. bis 99,9 Gew.-%, vorzugsweise 75,0 Gew.-%. bis 99,9 Gew.-%, besonders bevorzugt 80,0 Gew.-%. bis 99,0 Gew.-%, insbesondere 85,0 Gew.-%. bis 99,0 Gew.- %, Alkylmethacrylat-Wiederholungseinheiten mit 1 bis 20, vorzugsweise 1 bis 12, insbesondere 1 bis 8, Kohlenstoffatomen im Alkylrest,

B) 0,0 Gew.-%. bis 40,0 Gew.-%, vorzugsweise 0,0 Gew.-%. bis 24,9 Gew.-%, zweckmäßigerweise 1,0 Gew.-%. bis 29,9 Gew.-% insbesondere 1,0 Gew.-%. bis 14,9 Gew.- %, Alkylacrylat-Wiederholungseinheiten mit 1 bis 20, vorzugsweise 1 bis 12, besonders bevorzugt 1 bis 8, insbesondere 1 bis 4, Kohlenstoffatomen im Alkylrest,

C) 0,1 Gew.-%. bis 2,0 Gew.-% vernetzende Wiederholungseinheiten und

D)0,0 Gew.-%. bis 8,0 Gew.-% styrolische Wiederholungseinheiten der allgemeinen Formel (I)

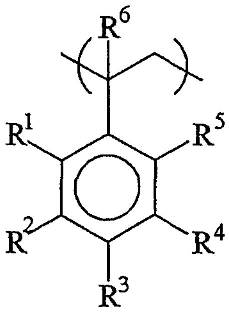

(I)

wobei sich die angegebenen Gewichtsprozente vorzugsweise zu 100,0 Gew.-% ergänzen.

Dabei sind die Verbindungen A), B), C) und D) natürlich voneinander verschieden, insbesondere umfassen die Verbindungen A) und B) keine vernetzenden Monomere C).

Die Reste $R^1$ bis $R^5$ bezeichnen jeweils unabhängig voneinander Wasserstoff, ein Halogen, insbesondere Fluor, Chlor oder Brom, oder eine Alkylgruppe mit 1 bis 6 Kohlenstoffatomen, vorzugsweise Wasserstoff. Der Rest $R^6$ kennzeichnet Wasserstoff oder eine Alkylgruppe mit 1 bis 6 Kohlenstoffatomen, vorzugsweise n Wasserstoff. Besonders geeignete Alkylgruppen mit 1 bis 6 Kohlenstoffatomen sind Methyl-, Ethyl-, n- Propyl-, iso- Propyl-, n- Butyl-, sec- Butyl-, tert.- Butyl-, n- Pentyl-, n- Hexylgruppen sowie Cyclopentyl- und Cyclohexylgruppen.

Somit umfassen styrolische Wiederholungseinheiten der allgemeinen Formel (I) wiederkehrende Struktureinheiten, welche durch Polymerisation von Monomeren der allgemeinen Formel (Ia) erhältlich sind.

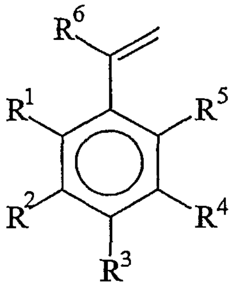

(Ia)

Geeignete Monomere der allgemeinen Formel (Ia) umfassen insbesondere Styrol, substituierte Styrole mit einem Alkylsubstituenten in der Seitenkette, wie beispielsweise α-Methylstyrol und α-Ethylstyrol, substituierte Styrole mit einem Alkylsubstituenten an dem Ring, wie beispielsweise Vinyltoluol und p-Methylstyrol, halogenierte Styrole, wie beispielsweise Monochlorstyrole, Dichlorstyrole, Tribromstyrole und Tetrabromstyrole.

Unter den oben erwähnten Alkylmethacrylat- Wiederholungseinheiten (A) werden wiederkehrende Struktureinheiten verstanden, welche durch Polymerisation von Estern der Methacrylsäure erhältlich sind. Geeignete Ester der Methacrylsäure umfassen insbesondere Methylmethacrylat, Ethylmethacrylat, Propylmethacrylat, Isopropylmethacrylat, n- Butylmethacrylat, sec- Butylmethacrylat, tert- Butylmethacrylat, Pentylmethacrylat, Hexylmethacrylat, Heptylmethacrylat, Octylmethacrylat, 2- Octylmethacrylat, Ethylhexylmethacrylat, Nonylmethacrylat, 2- Methyl- octylmethacrylat, 2- tert.- Butylheptylmethacrylat, 3- iso- Propylheptylmethacrylat, Decylmethacrylat, Undecylmethacrylat, 5- Methylundecylmethacrylat, Dodecylmethacrylat, 2- Methyldodecylmethacrylat, Tridecylmethacrylat, 5- Methyltridecylmethacrylat, Tetradecylmethacrylat, Pentadecylmethacrylat, Hexadecylmethacrylat, 2- Methylhexadecylmethacrylat, Heptadecylmethacrylat, 5- iso- Propylheptadecylmethacrylat, 5- Ethyloctadecylmethacrylat, Octadecylmethacrylat, Nonadecylmethacrylat, Eicosylmethacrylat, Cycloalkylmethacrylate, wie beispielsweise Cyclopentylmethacrylat, Cyclohexylmethacrylat, 3- Vinyl- 2- butyl- cyclohexylmethacrylat, Cycloheptylmethacrylat, Cyclooctylmethacrylat, Bornylmethacrylat und Isobornylmethacrylat.

Gemäß einer besonders bevorzugten Ausführungsform der vorliegenden Erfindung enthält der Kern, bezogen auf sein Gesamtgewicht, mindestens 50 Gew.-%, zweckmäßigerweise mindestens 60 Gew.-%, vorzugsweise mindestens 75 Gew.-%, insbesondere mindestens 85 Gew.-% Methylmethacrylat-Wiederholungseinheiten.

Unter den oben erwähnten Alkylacrylat- Wiederholungseinheiten (B) werden wiederkehrende Struktureinheiten verstanden, welche durch Polymerisation von Estern der Acrylsäure erhältlich sind. Geeignete Ester der Acrylsäure umfassen insbesondere Methylacrylat, Ethylacrylat, Propylacrylat, Isopropylacrylat, n- Butylacrylat, sec- Butylacrylat, tert- Butylacrylat, Pentylacrylat, Hexylacrylat, Heptylacrylat, Octylacrylat, 2- Octylacrylat, Ethylhexylacrylat, Nonylacrylat, 2- Methyl- octylacrylat, 2- tert.- Butylheptylacrylat, 3- iso- Propylheptylacrylat, Decylacrylat, Undecylacrylat, 5- Methylundecylacrylat, Dodecylacrylat, 2- Methyldodecylacrylat, Tridecylacrylat, 5- Methyltridecylacrylat, Tetradecylacrylat, Pentadecylacrylat, Hexadecylacrylat, 2- Methylhexadecylacrylat, Heptadecylacrylat, 5- iso- Propylheptadecylacrylat, 5-Ethyloctadecylacrylat, Octadecylacrylat, Nonadecylacrylat, Eicosylacrylat, Cycloalkylacrylate, wie beispielsweise Cyclopentylacrylat, Cyclohexylacrylat, 3- Vinyl- 2- butyl- cyclohexylacrylat, Cycloheptylacrylat, Cyclooctylacrylat, Bornylacrylat und Isobornylacrylat. Unter den oben erwähnten vernetzenden Wiederholungseinheiten (C) werden wiederkehrende Struktureinheiten verstanden, welche durch Polymerisation von vernetzenden Monomeren erhältlich sind. Geeignete vernetzende Monomere umfassen insbesondere alle die Verbindungen, welche in der Lage sind, unter den vorliegenden Polymerisationsbedingungen eine Vernetzung herbeizuführen. Hierzu gehören insbesondere

(a) Difunktionelle (Meth) acrylate, vorzugsweise
Verbindungen der allgemeinen Formel:

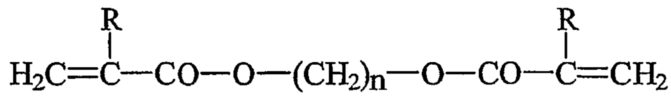

worin R Wasserstoff oder Methyl ist und n eine positive ganze Zahl größer gleich 2, vorzugsweise zwischen 3 und 20 bezeichnet, insbesondere Di (meth) acrylate des Propandiols, Butandiols, Hexandiols, Octandiols, Nonandiols, Decandiols und des Eicosandiols;
Verbindungen der allgemeinen Formel:

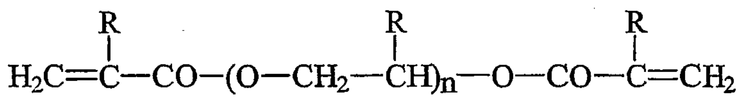

worin R Wasserstoff oder Methyl ist und n eine positive ganze Zahl zwischen 1 und 14 bedeutet, insbesondere Di (meth) acrylate des Ethylenglycols, Diethylenglycols, Triethylenglycols, Tetraethylenglycols, Dodecaethylenglycols, Tetradecaethylenglycols, Propylenglycols, Dipropylglycols und des Tetradecapropylenglycols.
Glycerindi (meth) acrylat, 2, 2'- Bis [p- (γ- methacryloxy- β- hydroxypropoxy)- phenylpropan] oder Bis- GMA, Biphenol-A- dimethacrylat, Neopentylglycoldi (meth) acrylat, 2, 2'- Di (4- methacryloxypolyethoxyphenyl) propan mit 2 bis 10 Ethoxygruppen pro Molekül und 1, 2- Bis (3- methacryloxy- 2- hydroxypropoxy) butan.

(b) Tri- oder polyfunktionelle (Meth) acrylate, insbesondere
Trimethylolpropantri (meth) acrylate und Pentaerythritoltetra (meth) acrylat.

(c) Pfropfvernetzer mit mindestens zwei unterschiedlich reaktiven C- C- Doppelbindungen, insbesondere Allylmethacrylat und Allylacrylat;

(d) aromatische Vernetzer, insbesondere 1, 2- Divinylbenzol, 1, 3- Divinylbenzol und 1, 4- Divinylbenzol.

Vorzugsweise erfolgt die Auswahl der Gewichtsanteile der Bestandteile A) bis D) des Kerns derart, dass der Kern eine Glasübergangstemperatur Tg von mindestens 10 °C, vorzugsweise von mindestens 30 °C, aufweist. Dabei kann die Glasübergangstemperatur Tg des Polymerisates in bekannter Weise mittels Differential Scanning Calorimetry (DSC) ermittelt werden. Weiterhin kann die Glasübergangstemperatur Tg auch mittels der Fox- Gleichung näherungsweise voraus berechnet werden. Nach Fox T. G., Bull. Am. Physics Soc. 1, 3, Seite 123 (1956) gilt:

$$\frac{1}{Tg} = \frac{x_1}{Tg_1} + \frac{x_2}{Tg_2} + \ldots + \frac{x_n}{Tg_n}$$

wobei $x_n$ für den Massebruch (Gew.- %/ 100) des Monomeren n steht und $Tg_n$ die Glasübergangstemperatur in Kelvin des Homopolymeren des Monomeren n bezeichnet. Weitere hilfreiche Hinweise kann der Fachmann dem Polymer Handbook 2nd Edition, J. Wiley & Sons, New York (1975) entnehmen, welche Tg- Werte für die geläufigsten Homopolymerisate angibt.

Die **erste Schale** der erfindungsgemäßen Kern- Schale- Schale- Teilchen weist eine Glasübergangstemperatur

kleiner 30° C, vorzugsweise kleiner 10 °C, insbesondere im Bereich von 0 bis- 75°C, auf. Dabei kann die Glasübergangstemperatur Tg des Polymerisates, wie vorstehend bereits erwähnt, mittels Differential Scanning Calorimetry (DSC) ermittelt und/ oder mittels der Fox- Gleichung näherungsweise voraus berechnet werden.

Die erste Schale umfasst, bezogen auf ihr Gesamtgewicht, die nachstehenden Bestandteile:

E) 92, 0 Gew.- %. bis 98, 0 Gew.- % (Meth) acrylat- Wiederholungseinheiten und
F) 2,0 Gew.-%. bis 8,0 Gew.-% styrolische Wiederholungseinheiten der allgemeinen Formel (I),

wobei sich die Gewichtsprozente zu 100 Gew.-% addieren.

Im Rahmen einer ganz besonders bevorzugten Ausführungsform der vorliegenden Erfindung umfasst die erste Schale

E-1) 90,0 Gew.-%. bis 97,9 Gew.-% Alkylacrylat-Wiederholungseinheiten mit 3 bis 8 Kohlenstoffatomen im Alkylrest und/oder Alkylmethacrylat-Wiederholungseinheiten mit 7 bis 14 Kohlenstoffatomen im Alkylrest, insbesondere Butylacrylat- und/oderDodecylmethacrylat-Wiederholungseinheiten, und
E-2) 0,1 Gew.-%. bis 2,5 Gew.-% vernetzende Wiederholungseinheiten,
F) 2,0 Gew.-%. bis 8,0 Gew.-% styrolische Wiederholungseinheiten der allgemeinen Formel (I),

wobei sich die Gewichtsteile vorzugsweise zu 100,0 Gew.-Teilen addieren.

Dabei sind die Verbindungen E-1), E-2) und F) natürlich voneinander verschieden, insbesondere umfassen die Verbindungen E-1) keine vernetzenden Monomere E-2).

Die **zweite Schale** umfasst, bezogen auf ihr Gesamtgewicht, mindestens 75 Gew.- % (Meth) acrylat- Wiederholungseinheiten. Sie enthält vorzugsweise

G) 50,0 Gew.-%. bis 100,0 Gew.-%, zweckmäßigerweise 60,0 Gew.-%. bis 100,0 Gew.-%, besonders bevorzugt 75,0 Gew.-%. bis 100,0 Gew.-%, insbesondere 85,0 bis 99,5 Gew.-%, Alkylmethacrylat-Wiederholungseinheiten mit 1 bis 20, vorzugsweise 1 bis 12, insbesondere 1 bis 8, Kohlenstoffatomen im Alkylrest,
H) 0,0 Gew.-%. bis 40,0 Gew.-%, vorzugsweise 0,0 Gew.-%. bis 25,0 Gew.-%, insbesondere 0,1 Gew.-%. bis 15,0 Gew.- %, Alkylacrylat-Wiederholungseinheiten mit 1 bis 20, vorzugsweise 1 bis 12, insbesondere 1 bis 8, Kohlenstoffatomen im Alkylrest,
I) 0,0 Gew.-%. bis 10,0 Gew.-%, vorzugsweise 0,0 Gew.-%. bis 8,0 Gew.-% styrolische Wiederholungseinheiten der allgemeinen Formel (I),

wobei dich die angegebenen Gewichtsprozente vorzugsweise zu 100,0 Gew.-% addieren.

Gemäß einer besonders bevorzugten Ausführungsform der vorliegenden Erfindung enthält die zweite Schale, bezogen auf ihr Gesamtgewicht, mindestens 50 Gew.-%, zweckmäßigerweise mindestens 60 Gew.-%, vorzugsweise mindestens 75 Gew.-%, insbesondere mindestens 85 Gew.-% Methylmethacrylat-Wiederholungseinheiten.

Weiterhin erfolgt die Auswahl der Bestandteile der zweiten Schale günstigerweise derart, dass die zweite Schale eine Glasübergangstemperatur Tg von mindestens 10°C, vorzugsweise von mindestens 30 °C, aufweist. Dabei kann die Glasübergangstemperatur Tg des Polymerisates, wie vorstehend bereits erwähnt mittels Differential Scanning Calorimetry (DSC) ermittelt und/oder mittels der Fox-Gleichung näherungsweise voraus berechnet werden.

Der Gesamtradius des Kern-Schale-Teilchens inklusive der gegebenenfalls vorhandenen zweiten Schale liegt im Bereich von größer 160 bis 260 nm, vorzugsweise im Bereich von 170 bis 255 nm, insbesondere im Bereich von 175 bis 250 nm. Dabei wird der Gesamtradius gemäß dem Coulter-Verfahren bestimmt. Dieses in der Literatur bekannte Verfahren zur Partikelgrößen-Bestimmung beruht auf der Messung des elektrischen Widerstands, der sich beim Durchtritt von Teilchen durch eine enge Messöffnung in charakteristischer Weise ändert. Weitere Details können beispielsweise Nachr. Chem. Tech. Lab. 43, 553-566 (1995) entnommen werden.

Weiterhin hat es sich für die Zwecke der vorliegenden Erfindung als ganz besonders günstig erwiesen, dass, jeweils bezogen auf sein Gesamtgewicht,

i) der Kern 5,0 Gew.-%. bis 50,0 Gew.-%, vorzugsweise 15,0 Gew.-%. bis 50,0 Gew.-%, zweckmäßigerweise 25,0 Gew.-%. bis 45,0 Gew.-%, insbesondere 30,0 Gew.-%. bis 40,0 Gew.-%,
ii) die erste Schale 20,0 Gew.-%. bis 75,0 Gew.-%, vorzugsweise 30,0 Gew.-%. bis 60,0 Gew.-%, zweckmäßigerweise 35,0 Gew.-%. bis 55,0 Gew.-%, insbesondere 40,0 Gew.-%. bis 50 Gew.-%, und
iii) die zweite Schale 5,0 Gew.-%. bis 50,0 Gew.-%, vorzugsweise 5,0 Gew.-%. bis 40,0 Gew.-%, zweckmäßigerweise 10,0 Gew.-%. bis 30,0 Gew.-%, insbesondere 15,0 Gew.-%. bis 25,0 Gew.-%,

ausmacht, wobei sich die Gewichtsprozente vorzugsweise zu 100,0 Gew.-% addieren.

Die Herstellung der erfindungsgemäßen Kern-Schale-Teilchen kann auf an sich bekannte Weise, beispielsweise mittels mehrstufiger Emulsionspolymerisation erfolgen. Zweckmäßigerweise erfolgt sie durch ein Verfahren, bei welchem man Wasser und Emulgator vorlegt. Dabei enthält die Vorlage vorzugsweise 90,00 bis 99,99 Gew.-Teile Wasser und 0,01 bis 10,00 Gew.-Teile Emulgator, wobei sich die angegebenen Gewichtsteile günstigerweise zu 100,00 Gewichtsteilen addieren.

Zu dieser Vorlage werden dann schrittweise in der folgenden Reihenfolge

b) die Monomere für den Kern in den gewünschten Verhältnissen zugegeben und bis zu einem Umsatz von mindestens 85,0 Gew.-%, vorzugsweise mindestens 90,0 Gew.-%, zweckmäßigerweise mindestens 95,0 Gew.-%, insbesondere mindestens 99 Gew.-%, jeweils bezogen auf ihr Gesamtgewicht, polymerisiert,

c) die Monomere für die erste Schale in den gewünschten Verhältnissen zugegeben und bis zu einem Umsatz von mindestens 85,0 Gew.-%, vorzugsweise mindestens 90,0 Gew.-%, zweckmäßigerweise mindestens 95,0 Gew.-%, insbesondere mindestens 99 Gew.-%, jeweils bezogen auf ihr Gesamtgewicht, polymerisiert,

d) gegebenenfalls die Monomere für die zweite Schale in den gewünschten Verhältnissen zugegeben und bis zu einem Umsatz von mindestens 85,0 Gew.-%, vorzugsweise mindestens 90,0 Gew.-%, zweckmäßigerweise mindestens 95,0 Gew.-%, insbesondere mindestens 99 Gew.-%, jeweils bezogen auf ihr Gesamtgewicht, polymerisiert.

Dabei bezeichnen Polymere im Sinne der vorliegenden Erfindung Verbindungen, welche im Vergleich mit der jeweiligen Ausgangsverbindung A) bis I), dem so genannten Monomer, mindestens das zehnfache Molekulargewicht aufweisen.

Die Verfolgung des Reaktionsfortschrittes der Polymerisation in jeden Schritt kann auf bekannte Weise, beispielsweise gravimetrisch oder mittels Gaschromatographie erfolgen.

Gemäß der vorliegenden Erfindung wird die Polymerisation in den Schritten b) bis d) vorzugsweise bei einer Temperatur im Bereich von 0 bis 120 °C, vorzugsweise im Bereich von 30 bis 100 °C durchgeführt.

Dabei haben sich Polymersiationstemperaturen im Bereich von größer 60 bis kleiner 90 °C, zweckmäßigerweise im Bereich von größer 70 bis kleiner 85 °C, vorzugsweise im Bereich von größer 75 bis kleiner 85 °C, als ganz besonders günstig erwiesen.

Die Initiierung der Polymerisation erfolgt mit den für die Emulsionspolymerisation gebräuchlichen Initiatoren. Geeignete organische Initiatoren sind beispielsweise Hydroperoxide, wie tert.-Butyl-Hydroperoxid oder Cumolhydroperoxid. Geeignete anorganische Initiatoren sind Wasserstoffperoxid sowie die Alkalimetall- und die Ammoniumsalze der Peroxodischwefelsäure, insbesondere Natrium- und Kaliumperoxodisulfat.

Geeignete Redox-Initiatorsysteme sind beispielsweise Kombinationen von tertiären Aminen mit Peroxiden oder Natriumdisulfit und Alkalimetall- und die Ammoniumsalze der Peroxodischwefelsäure, insbesondere Natrium- und Kaliumperoxodisulfat, oder besonders bevorzugt Peroxide. Weitere Details können der Fachliteratur, insbesondere H. Rauch-Puntigam, Th. Völker, "Acryl- und Methacrylverbindungen", Springer, Heidelberg, 1967 oder Kirk-Othmer, Encyclopedia of Chemical Technology, Vol. 1, Seiten 386ff, J. Wiley, New York, 1978 entnommen werden. Im Rahmen der vorliegenden Erfindung ist der Einsatz von organischen und/oder anorganischen Initiatoren besonders bevorzugt.

Die genannten Initiatoren können sowohl einzeln als auch in Mischung verwendet werden. Sie werden vorzugsweise in einer Menge von 0,05 bis 3,0 Gew.-%, bezogen auf das Gesamtgewicht der Monomere der jeweiligen Stufe, eingesetzt. Man kann auch bevorzugt die Polymerisation mit einem Gemisch verschiedener Polymerisationsinitiatoren unterschiedlicher Halbwertzeit durchführen, um den Radikalstrom im Verlauf der Polymerisation sowie bei verschiedenen Polymerisationstemperaturen konstant zu halten.

Die Stabilisierung des Ansatzes erfolgt vorzugsweise mittels Emulgatoren und/oder Schutzkolloiden. Bevorzugt wird die Stabilisierung durch Emulgatoren, um eine niedrige Dispersionsviskosität zu erhalten. Die Gesamtmenge an Emulgator beträgt vorzugsweise 0,1 bis 5 Gew.-%, insbesondere 0,5 bis 3 Gew.-%, bezogen auf das Gesamtgewicht der Monomere A) bis I). Besonders geeignete Emulgatoren sind anionische oder nichtionische Emulgatoren oder deren Mischungen, insbesondere:

➢ Alkylsulfate, vorzugsweise solche mit 8 bis 18 Kohlenstoffatomen im Alkylrest, Alkyl- und Alkylarylethersulfate mit 8 bis 18 Kohlenstoffatomen im Alkylrest und 1 bis 50 Ethylenoxideinheiten;

➢ Sulfonate, vorzugsweise Alkylsulfonate mit 8 bis 18 Kohlenstoffatomen im Alkylrest, Alkylarylsulfonate mit 8 bis 18 Kohlenstoffatomen im Alkylrest, Ester und Halbester der Sulfobernsteinsäure mit einwertigen Alkoholen oder Alkylphenolen mit 4 bis 15 Kohlenstoffatomen im Alkylrest; gegebenenfalls können diese Alkohole oder Alkylphenole auch mit 1 bis 40 Ethylenoxideinheiten ethoxyliert sein;

➢ Phosphorsäureteilester und deren Alkali- und Ammoniumsalze, vorzugsweise Alkyl- und Alkylarylphosphate mit 8 bis 20 Kohlenstoffatomen im Alkyl- bzw. Alkylarylrest und 1 bis 5 Ethylenoxideinheiten;

➢ Alkylpolyglykolether, vorzugsweise mit 8 bis 20 Kohlenstoffatomen im Alkylrest und 8 bis 40 Ethylenoxideinheiten;

➢ Alkylarylpolyglykolether, vorzugsweise mit 8 bis 20 Kohlenstoffatomen im Alkyl- bzw. Alkylarylrest und 8 bis 40 Ethylenoxideinheiten;

➢ Ethylenoxid/Propylenoxid-Copolymere, vorzugsweise Blockcopolymere, günstigerweise mit 8 bis 40 Ethylenoxid- bzw. Propylenoxideinheiten.

Erfindungsgemäß bevorzugt werden Gemische aus anionischem Emulgator und nichtionischen Emulgator eingesetzt. Dabei haben sich Gemische aus einem Ester oder Halbester der Sulfobernsteinsäure mit einwertigen Alkoholen oder Alkylphenolen mit 4 bis 15 Kohlenstoffatomen im Alkylrest als anionischem Emulgator und einem Alkylpolyglykolether, bevorzugt mit 8 bis 20 Kohlenstoffatomen im Alkylrest und 8 bis 40 Ethylenoxideinheiten, als nichtionischem Emulgator in einem Gewichtsverhältnis von 8 : 1 bis 1 : 8 ganz besonders bewährt.

Gegebenenfalls können die Emulgatoren auch in Mischung mit Schutzkolloiden eingesetzt werden. Geeignete Schutzkolloide umfassen u. a. teilverseifte Polyvinylacetate, Polyvinylpyrrolidone, Carboxymethyl-, Methyl-, Hydroxyethyl-, Hydroxypropyl- Cellulose, Stärken, Proteine, Poly (meth) acrylsäure, Poly (meth) acrylamid, Polyvinylsulfonsäuren, Melaminformaldehydsulfonate, Naphthalinformaldehydsulfonate, Styrol- Maleinsäure- und Vinylethermaleinsäure- Copolymere. Falls Schutzkolloide eingesetzt werden, erfolgt dies vorzugsweise in einer Menge von 0, 01 bis 1, 0 Gew.-%, bezogen auf die Gesamtmenge der Monomere A) bis I) . Die Schutzkolloide können vor dem Start der Polymerisation vorgelegt oder zudosiert werden.

Der Initiator kann vorgelegt oder zudosiert werden. Weiterhin ist es auch möglich, einen Teil des Initiators vorzulegen und den Rest zudosieren.

Bevorzugt wird die Polymerisation durch Erhitzen des Ansatzes auf die Polymerisationstemperatur und Zudosierung des Initiators, vorzugsweise in wässriger Lösung, gestartet. Die Dosierungen von Emulgator und Monomeren können separat durchgeführt werden oder als Gemisch. Bei der Zudosierung von Gemischen aus Emulgator und Monomer wird so vorgegangen, dass Emulgator und Monomer in einem dem Polymerisationsreaktor vorgeschalteten Mischer vorgemischt werden. Bevorzugt wird der Rest an Emulgator und der Rest an Monomer, welche nicht vorgelegt wurden, nach dem Start der Polymerisation getrennt voneinander zudosiert. Vorzugsweise wird mit der Dosierung 15 bis 35 Minuten nach dem Start der Polymerisation begonnen.

Weiterhin ist es für die Zwecke der vorliegenden Erfindung besonders vorteilhaft, dass die Vorlage ein so genanntes "Saatlatex" enthält, welches vorzugsweise durch Polymerisation von Alkyl(meth)acrylaten erhältlich ist und darüber hinaus günstigerweise einen Teilchenradius, im Bereich von 3,0 bis 20,0 nm aufweist. Diese kleinen Radien können nach einer definierten Aufpolymerisation des Saatlatex, bei der eine Schale um den Saatlatex aufgebaut wird und die Radien der so hergestellten Teilchen nach dem Coulter-Verfahren gemessen wurden, berechnet werden. Dieses in der Literatur bekannte Verfahren zur Partikelgrößen-Bestimmung beruht auf der Messung des elektrischen Widerstands, der sich beim Durchtritt von Teilchen durch eine enge Messöffnung in charakteristischer Weise ändert. Weitere Details können beispielsweise Nachr. Chem. Tech. Lab. 43, 553-566 (1995) entnommen werden.

Zu dem Saatlatex werden die Monomerbestandteile des eigentlichen Kerns, d. h. die erste Zusammensetzung, vorzugsweise unter solchen Bedingungen zugegeben, dass die Bildung neuer Teilchen vermieden wird. Dadurch wird das in der ersten Verfahrensstufe entstehende Polymerisat schalenförmig um das Saatlatex herum gelagert. Analog werden die Monomerbestandteile des ersten Schalenmaterials (zweite Zusammensetzung) unter solchen Bedingungen zu dem Emulsionspolymerisat zugegeben, dass die Bildung neuer Teilchen vermieden wird. Dadurch wird das in der zweiten Stufe entstehende Polymerisat schalenförmig um den bestehenden Kern herum gelagert. Diese Vorgehensweise ist für jede weitere Schale entsprechend zu wiederholen.

Gemäß einer weiteren bevorzugten Ausführungsform der vorliegenden Erfindung werden die erfindungsgemäßen Kern-Schale-Teilchen durch ein Emulsionspolymerisationsverfahren erhalten werden, bei dem man anstatt des Saatlatexes einen langkettigen, aliphatischen Alkohol, vorzugsweise mit 12 bis 20 Kohlenstoffatomen, emulgiert vorlegt. In einer bevorzugten Ausführungsform dieses Verfahrens wird Stearylalkohol als langkettiger, aliphatischer Alkohol verwendet. Die Kern-Schale-Struktur wird analog zur oben beschriebenen Vorgehensweise durch schrittweise Zugabe und Polymerisation der entsprechenden Monomere unter Vermeidung der Bildung neuer Teilchen erhalten. Weitere Einzelheiten zum Polymerisationsverfahren kann der Fachmann den Patentschriften DE 3343766, DE 3210891, DE 2850105, DE 2742178 und DE 3701579 entnehmen.

Unabhängig von der konkreten Vorgehensweise hat es sich jedoch im Rahmen der vorliegenden Erfindung als ganz besonders günstig erwiesen, die zweite und die dritte Monomermischung nach Maßgabe des Verbrauchs zuzudosieren.

Die Einstellung der Kettenlängen, insbesondere der (Co)Polymerisate der zweiten Schale, kann durch Polymerisation des Monomers bzw. des Monomerengemisches in Gegenwart von Molekulargewichtsreglern erfolgen, wie insbesondere von den dafür bekannten Mercaptanen, wie beispielsweise n-Butylmercaptan, n-Dodecylmercaptan, 2-

Mercaptoethanol oder 2-Ethylhexylthioglycolat, Pentaerythrittetrathioglycolat; wobei die Molekulargewichtsregler im allgemeinen in Mengen von 0,05 bis 5 Gew.-% bezogen auf das Monomerengemisch, bevorzugt in Mengen von 0,1 bis 2 Gew.-% und besonders bevorzugt in Mengen von 0,2 bis 1 Gew.-% auf das Monomerengemisch eingesetzt werden (vgl. beispielsweise H. Rauch-Puntigam, Th. Völker, "Acryl- und Methacrylverbindungen", Springer, Heidelberg, 1967; Houben-Weyl, Methoden der organischen Chemie, Bd. XIV/1. Seite 66, Georg Thieme, Heidelberg, 1961 oder Kirk-Othmer, Encyclopedia of Chemical Technology, Vol. 1, Seiten 296ff, J. Wiley, New York, 1978). Bevorzugt wird als Molekulargewichtsregler n-Dodecylmercaptan eingesetzt.

Nach Abschluss der Polymerisation kann zur Restmonomerentfernung in Anwendung bekannter Methoden nachpolymerisiert werden, beispielsweise mittels initiierter Nachpolymerisation.

Da sich das erfindungsgemäße Verfahren insbesondere zur Herstellung von wässrigen Dispersionen mit hohem Feststoffgehalt größer 50 Gew.-%, bezogen auf das Gesamtgewicht der wässrigen Dispersion, eignet, wählt man die relativen Anteile aller Substanzen zweckmäßigerweise derart, dass das Gesamtgewicht der Monomere, bezogen auf das Gesamtgewicht der wässrigen Dispersion, größer 50,0 Gew.-%, zweckmäßigerweise größer 51,0 Gew.-%, vorzugsweise größer 52,0 Gew.-%, ist. Zu den in diesem Zusammenhang zu berücksichtigen Substanzen gehören neben den Monomeren auch alle anderen eingesetzten Substanzen, wie Wasser, Emulgator, Initiator, ggf. Regler und Schutzkolloide usw...

Die durch das erfindungsgemäße Verfahren erhältlichen wässrigen Dispersionen zeichnen sich einen niedrigen Koagulatgehalt aus, welcher, bezogen auf das Gesamtgewicht der wässrigen Dispersion, vorzugsweise weniger als 5,0 Gew.-%, zweckmäßigerweise weniger als 3,0 Gew.-%, insbesondere weniger als 1,5 Gew.-% ist. Gemäß einer ganz besonders bevorzugten Ausführungsform der vorliegenden Erfindung weist die wässrige Dispersion, bezogen auf ihr Gesamtgewicht, weniger als 1,0 Gew.-%, vorzugsweise weniger als 0,5 Gew.-%, zweckmäßigerweise weniger als 0,25 Gew.-%, insbesondere 0,10 Gew.-% oder weniger, Koagulat auf.

Dabei bezeichnet der Begriff "Koagulat" in diesem Zusammenhang wasserunlösliche Bestandteile, welche vorzugsweise durch Filtration der Dispersion zweckmäßigerweise über eine Filtermanschette mit eingespanntem Filtergewebe Nr. 0.90 DIN 4188 abfiltriert werden können.

Das erfindungsgemäße Kern-Schale-Teilchen kann aus der Dispersion beispielsweise durch Sprühtrocknen, Gefrierkoagulation, Ausfällen durch Elektrolytzusatz oder durch mechanische oder thermische Belastung, wie sie gemäß DE 27 50 682 A1 oder US 4 110 843 mittels eines Entgasungsextruders durchführbar ist, gewonnen werden. Das Verfahren der Sprühtrocknung ist am gebräuchlichsten, obwohl die anderen genannten Verfahren den Vorzug haben, dass dabei die wasserlöslichen Polymerisationshilfsstoffe wenigstens teilweise von dem Polymerisat abgetrennt werden.

**Komponente c.)**

Die Komponente c.) ist eine optionale Komponente, die allein oder zusammen mit der Komponente d.) vorliegen kann.

Die Komponente c.) kann in der Monomerzusammensetzung mit der Komponente a.) übereinstimmen. Die Herstellung kann weitgehend analog erfolgen mit dem Unterschied, dass man die Polymerisationsparameter so wählt, dass man höhermolekulare Polymerisate erhält. Dies kann z. B. durch eine Absenkung der eingesetzten Molekulargewichtsreglermenge geschehen.

Die Komponente c.) ist ein höhermolekulares (Meth) acrylat (co) polymer, charakterisiert durch eine Lösungsviskosität in Chloroform bei 25 °C (ISO 1628- Teil 6) von größer/ gleich 65, bevorzugt 68 bis 75 ml/g. Beispielsweise kann die Formmasse Plexiglas® hw 55, hergestellt von der Röhm GmbH & Co. KG, verwendet werden.

Dies kann einem Molekulargewicht $M_w$ (Gewichtsmittel) von 160.000 g/mol (Bestimmung von $M_w$ mittels Gelpermeationschromatographie unter Bezug auf Polymethylmethacrylat als Eichstandard) entsprechen. Die Bestimmung des Molekulargewichts Mw kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Die Komponente c.) kann in der Monomerzusammensetzung mit der Komponente a.) übereinstimmen. Die Komponente c.) ist bevorzugt ein Copolymer aus Methylmethacrylat, Styrol und Maleinsäureanhydrid.

Geeignete Mengenanteile können z. B. sein:

50 Gew.-%. bis 90 Gew.-%., bevorzugt 70 Gew.-%. bis 80 Gew.-% Methylmethacrylat,
10 Gew.-%. bis 20 Gew.-%., bevorzugt 12 Gew.-%. bis 18 Gew.-% Styrol und
5 Gew.-%. bis 15 Gew.-%., bevorzugt 8 Gew.-%. bis 12 Gew.-% Maleinsäureanhydrid

**Komponente d.)**

Die Komponente d.) ist eine optionale Komponente, die allein oder zusammen mit der Komponente c.) eingesetzt

/ verwendet werden kann.

Die Komponente d.) ist ein weiteres von a.) verschiedenes (Meth) acrylat (co) polymer, charakterisiert durch eine Lösungsviskosität in Chloroform bei 25 °C (ISO 1628- Teil 6) von 50 bis 55, bevorzugt 52 bis 54 ml/g. Beispielsweise kann die Formmasse Plexiglas® 8 n, hergestellt von der Röhm GmbH & Co. KG oder die Formmasse verwendet werden.

Dies kann einem Molekulargewicht Mw (Gewichtsmittel) im Bereich von 80.000 bis 200.000 (g/mol), bevorzugt von 100.000 bis 150.000 entsprechen. Die Bestimmung des Molekulargewichts $M_w$ kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Die Komponente d.) besteht zu 80 Gew.- %. bis 100 Gew.- %., vorzugsweise zu 90 Gew.- %.- 99, 5 Gew.- %, aus radikalisch polymerisierten Methylmethacrylat- Einheiten und gegebenenfalls zu 0 Gew.- %.- 20 Gew.- %., bevorzugt zu 0, 5 Gew.- %.- 10 Gew.- % aus weiteren radikalisch polymerisierbaren C1- bis C4- Alkyl (meth) acrylaten, insbesondere Methylacrylat, Ethylacrylat oder Butylacrylat. Vorzugsweise liegt das mittlere Molekulargewicht $M_w$ der Matrix im Bereich von 90.000 g/mol bis 200.000 g/mol, insbesondere 100.000 g/mol bis 150.000 g/mol.

Die Komponente d.) ist bevorzugt ein Copolymer aus 95 Gew.-%. bis 99,5 Gew.-% Methylmethacrylat und 0,5 Gew.-%. bis 5 Gew.-%., bevorzugt 1 Gew.-%. bis 4 Gew.-% Methylacrylat.

Die Komponente d.) kann eine Vicaterweichungstemperatur VET (ISO 306-B50) von mindestens 107°C, bevorzugt von 108 °C bis 114 °C aufweisen. Der Schmelzindex MVR (ISO 1133, 230 °C / 3,8 kg) kann z. B. im Bereich von größer/gleich 2,5 $cm^3$/10 min liegen.

## Übliche Zusatz-, Hilfs- und/oder Füllstoffe

Die Polymermischung kann in an sich bekannter Weise noch übliche Zusatz-, Hilfs- und/oder Füllstoffe, wie z. B. Thermostabilisatoren, UV-Stabilisatoren, UV-Absorber, Antioxidantien enthalten.

Für das Spritzgussverfahren sind insbesondere Gleitmittel bzw. Formtrennmittel von Bedeutung, die ein mögliches Anhaften der Polymermischung an die Spritzgussform vermindern bzw. ganz verhindern können.

Als Hilfsstoffe können demnach Gleitmittel, z. B. ausgewählt aus der Gruppe der gesättigten Fettsäuren mit weniger als $C_{20}$, bevorzugt $C_{16}$ bis $C_{18}$ Kohlenstoffatomen oder der gesättigten Fettalkohole mit weniger als $C_{20}$, bevorzugt $C_{16}$ bis $C_{18}$ Kohlenstoffatomen enthalten sein. Bevorzugt sind geringe Mengenanteile von höchstens 0,25, z. B. 0,05 bis 0,2 Gew.-%, bezogen auf die Polymermischung enthalten.

Geeignet sind z. B. Stearinsäure, Palmitinsäure, technische Gemische aus Stearin- und Palmitinsäure. Weiterhin geeignet sind z. B. n-Hexadecanol, n-Octadecanol, sowie technische Gemische aus n-Hexadecanol und n-Octadecanol.

Ein besonders bevorzugtes Gleit- bzw. Formtrennmittel ist Stearylalkohol.

## Spritzgegossener Formkörper

Aus der erfindungsgemäßen Polymermischung lassen sich, in an sich bekannter Weise, im Spritzgussverfahren entsprechende spritzgegossene Formkörper herstellen.

## Verwendungen

Die Polymermischung kann zur Herstellung von spritzgegossenen Formkörpern verwendet werden, die folgende Eigenschaften aufweisen:

- ein Zugmodul (ISO 527) von mindestens 2.500, bevorzugt mindestens 2.600, besonders bevorzugt mindestens 2 700 MPa,
- eine Vicaterweichungstemperatur VET (ISO 306-B50) von mindestens 110, bevorzugt mindestens 111, insbesondere mindestens 112, z. B. von 110 bis 125 °C,
- eine Schlagzähigkeit SZ (ISO 179, edgewise) von mindestens 30, bevorzugt mindestens 40 KJ/$m^2$, und
- einen Schmelzindex MVR (ISO 1133, 230 °C / 3,8 kg) von mindestens 1,0, bevorzugt mindestens 1,5 $cm^3$/10 min.

Die spritzgegossenen Formkörper können als Teile von Haushaltsgeräten, Kommunikationsgeräten, Hobby- oder Sportgeräten, Karosserieteile oder Teile von Karosserieteilen im Automobil-, Schiffs- oder Flugzeugbau verwendet werden. Typische Beispiele für Karosserieteile oder Teile von Karosserieteilen von Automobilen sind z. B. Spoiler, Blenden, Dachmodule oder Außenspiegelgehäuse.

**Vorteilhafte Wirkungen der Erfindung**

Aus den erfindungsgemäßen Polymermischungen bzw. Formmassen lassen sich Formkörper, insbesondere Spritzgussteile, herstellen, die hohen Materialanforderungen, wie sie z. B. für Automobilaußenteile bestehen, genügen. Dabei ist es gelungen vier besonders wichtige Anforderungen, Zugmodul, Vicaterweichungstemperatur, Schlagzähigkeit, und Schmelzindex gleichzeitig in für Verarbeitung und Anwendung geeigneten Größenordnungen sicherzustellen. Insbesondere bedingt die gute Fließfähigkeit die geforderte Verarbeitbarkeit im Spritzguss auch bei anspruchsvollen Teilegeometrien. Dabei ist es überraschend, dass gleichzeitig Spritzgussteile von hoher Zähigkeit, hoher Witterungs- und Temperaturbeständigkeit erhalten werden können. Darüber hinaus werden noch eine Reihe von weiteren wünschenswerten Eigenschaften, wie z. B. Chemikalienresistenz, Gelbwert und Eigenfarbe in durchaus befriedigender Weise erreicht. Über das Mischungsverhältnis der Komponenten a) bis d) kann das Eigenschaftsprofil individuell auf die Anforderungen im Einzelfall eingestellt werden.

**Beispiele**

***Herstellung der Komponente a.):***

Eine Monomermischung aus 6355 g Methylmethacrylat, 1271 g Styrol und 847 g Maleinsäureanhydrid wird mit 1, 9 g tert.- Butylperneodecanoat und 0, 85 g tert.- Butylperoxi- 3, 5, 5- trimethylhexanoat als Polymerisationsinitiator und 19, 6 g 2- Mercaptoethanol als Molekulargewichtsregler sowie mit 4, 3 g Palmitinsäure versetzt.

Das resultierende Gemisch wird in eine Polymerisationskammer gefüllt und 10 Minuten entgast. Danach wird im Wasserbad 6 Stunden bei 60°C, nachfolgend 30 Stunden bei 55°C Wasserbadtemperatur polymerisiert. Nach etwa 30 Stunden erreicht das Polymerisationsgemisch mit 126°C seine Maximaltemperatur. Nach Entfernung der Polymerisationskammer aus dem Wasserbad wird das Polymerisat in der Polymerisationskammer noch 7 Stunden bei 117°C im Luftschrank getempert.

Das resultierende Copolymerisat ist klar und nahezu farblos und besitzt eine V.N. (Lösungsviskositätszahl nach ISO 1628-6, 25°C, Chloroform) von 48,7ml/g. Die Fließfähigkeit des Copolymerisats wurde nach ISO 1133 bei 230°C und 3,8kg mit MVR = 3,27 $cm^3$/10min bestimmt.

Die Komponente a.) ist das oben beschriebene Copolymerisat aus 75 Gew.-% Methylmethacrylat, 15 Gew.-% Styrol und 10 Gew.-% Maleinsäureanhydrid.

Die Komponente b.) wurde folgendermaßen hergestellt:

Das im Folgenden beschriebene Kern- Schale- Schale- Teilchen wurden mittels Emulsionspolymerisation gemäß der nachfolgenden allgemeinen Herstellungsvorschrift hergestellt. Dabei wurden die in Tabelle 1 angegebenen Emulsionen I bis III eingesetzt.

Bei 83 °C (Kessel- Innentemperatur) wurden unter Rühren 19, 416 kg Wasser in einem Polymerisationskessel vorgelegt. Es erfolgte eine Zugabe von 16, 2 g Natriumcarbonat und 73 g Saatlatex. Anschließend wurde die Emulsion I über 1 h zudosiert. 10 min nach Zulaufende der Emulsion I wurden die Emulsion II über einen Zeitraum von ca. 2 h zudosiert. Anschließend wurde ca. 90 min nach Zulaufende der Emulsion II Emulsion III über einen Zeitraum von ca. 1 h zudosiert. 30 min nach Zulaufende der Emulsion III wurde auf 30 °C abgekühlt.

Zur Separation der Kern-Schale-Teilchen wurde die Dispersion über 2 d bei -20 °C eingefroren, danach wieder aufgetaut und die koagulierte Dispersion über ein Filtergewebe abgetrennt. Die Trocknung des Feststoffs erfolgte bei 50 °C im Trockenschrank (Dauer: ca. 3 d).

Die Teilchengröße der Kern-Schale-Teilchen betrug 234 nm und wurde mit Hilfe eines Coulter N4 Gerätes bestimmt, wobei die Partikel in Dispersion vermessen wurden.

Tabelle 1: Zusammensetzung der einzelnen Emulsionen (alle Angaben in [g])

| **Emulsion I** | |
|---|---:|
| Wasser | 8109,65 |
| Natriumpersulfat | 8,24 |
| Aerosol OT 75 | 65,88 |
| Methylmethacrylat | 14216,72 |
| Ethylacrylat | 593,6 |
| Allylmethacrylat | 29,68 |

(fortgesetzt)

| | |
|---|---|
| **Emulsion II** | |
| Wasser | 7081,18 |
| Natriumpersulfat | 18,59 |
| Aerosol OT 75 | 84,71 |
| Butylacrylat | 17744,4 |
| Styrol | 954 |
| Allylmethacrylat | 381,6 |
| **Emulsion III** | |
| Wasser | 2992,59 |
| Natriumpersulfat | 8,24 |
| Aerosol OT 75 | 10,59 |
| Methylmethacrylat | 7632 |
| Ethylacrylat | 848 |

Als Komponente c.) wurde eingesetzt: Ein handelsübliches Copolymerisat aus 75 Gew.-% Methylmethacrylat, 15 Gew.-% Styrol und 10 Gew.-% Maleinsäureanhydrid mit einer Lösungsviskositätszahl nach ISO 1628-6, 25°C, Chloroform von 68 ml/g

Als Komponente d.) wurde eingesetzt: ein handelsübliches Copolymerisat aus 99 Gew.-% Methylmethacrylat und 1 Gew.-% Methylacrylat mit einer Lösungsviskosität in Chloroform bei 25 °C (ISO 1628 - Teil 6) etwa 52 bis 54 ml/g.

**Erfindungsgemäße Beispiele 1 bis 3**

*Beispiel 1:*

Polymermischung aus:

Komponente a.): 50 Gew.-%
Komponente b.): 15,6 Gew.-%
Komponente c.): -
Komponente d.): 34,4 Gew.-%
Gleitmittel : 0,1 Gew.-% Stearylalkohol (bezogen auf die Summe der Komponenten a.) bis d.))

*Beispiel 2:*

Polymermischung aus:

Komponente a.): 50 Gew.-%
Komponente b.): 13 Gew.-%
Komponente c.): 37 Gew.-%
Komponente d.): -
Gleitmittel : 0,2 Gew.-% Stearylalkohol (bezogen auf die Summe der Komponenten a.) bis d.))

*Beispiel 3:*

Polymermischung aus:

Komponente a.): 52 Gew.-%
Komponente b.): 9 Gew.-%
Komponente c.): 39 Gew.-%
Komponente d.): -
Gleitmittel : 0,2 Gew.-% Stearylalkohol (bezogen auf die Summe der Komponenten a.) bis d.))

**Vergleichsbeispiele (Vbsp. 4 - 5)**

Vergleichsbeispiel 4:

Polymermischung aus:

Komponente a.): 48 Gew.-%
Metablen IR441: 19 Gew.-% (Schlägzähmodifier von Mitsubishi)
Komponente d.): 33 Gew.-%
Gleitmittel : 0,1 Gew.-% Stearylalkohol (bezogen auf die Summe der Komponenten a.) bis d.))

Vergleichsbeispiel 5:

Polymermischung aus:

Komponente a.): 50 Gew.-%
Metablen IR 441: 13 Gew.-%
Komponente c.): 37 Gew.-%
Komponente d.): -
Gleitmittel : 0,2 Gew.-% Stearylalkohol (bezogen auf die Summe der Komponenten a.) bis d.))

| Eigenschaft | Bsp.1 | Bsp.2 | Bsp.3 | Vbsp.4 | Vbsp.5 |
|---|---|---|---|---|---|
| VET (°C) | 112,1 | 118,76 | 119,9 | 109,2 | 116,1 |
| SZ [kJ/m$^2$] | 63 | 68 | 57 | 34,4 | 16,1 |
| MVR [cm$^3$/10 min] | 3,0 | 1,5 | 1,9 | 3,3 | 2,2 |

Die Ergebnisse zeigen, dass bei geringerer Schlagzähmodifierkonzentration des erfindungsgemässen Schlagzähmodifiers die Schlagzähigkeit (SZ) grösser wird und die Vicaterweichungstemperatur (VET) ansteigt.

## Patentansprüche

**1.** Polymermischung, die folgende Komponenten enthält:

a. ein niedermolekulares (Meth)acrylat(co)polymer, zusammengesetzt aus Methylmethacrylat, Styrol und Maleinsäureanhydrid
charakterisiert durch eine Lösungsviskosität in Chloroform bei 25 °C (ISO 1628 - Teil 6) von kleiner/gleich 55 ml/g
b. ein Schlagzähmodifizierungsmittel auf Basis von vernetzten Poly(meth)acrylaten
c. ein höhermolekulares (Meth)acrylat(co)polymer,
charakterisiert durch eine Lösungsviskosität in Chloroform bei 25 °C (ISO 1628 - Teil 6) von größer/gleich 65 ml/g und/oder
d. ein von a) verschiedenes (Meth)acrylat(co)polymer, bestehend aus 80 Gew.-%. bis 100 Gew.-% radikalisch polymerisierten Methylmethacrylat-Einheiten und 0 Gew.-%. - 20 Gew.-% C1 - bis C4-Alkylacrylaten, Gew. % jeweils bezogen aus die Gesamtmasse von d.,
charakterisiert durch eine Lösungsviskosität in Chloroform bei 25 °C (ISO 1628 - Teil 6) von 50 bis 55 ml/g

wobei die Komponenten a.), b.), c.) und/oder d.) jeweils für sich genommen als einzelne Polymere als auch als Mischungen von Polymeren verstanden werden können,
wobei die Komponenten in folgenden Mengenverhältnissen vorliegen

a.) 25 Gew.-%. bis 75 Gew.-%
b.) 7 Gew.-%. bis 60 Gew.-%
c.) und/oder d.)1 0 Gew.-%. bis 50 Gew.-%

wobei a.), b.), c.) und/oder d.) sich zu 100 Gew.-% addieren,
wobei die Komponente b.) einen Kern / Schale / Schale Aufbau aufweist und wobei jeweils bezogen auf sein Gesamtgewicht,
der Kern 5,0 bis 50,0 Gew.-%,
die erste Schale 20,0 bis 75,0 Gew.-% und
die zweite Schale 5,0 bis 50,0 Gew.-%
ausmacht, wobei sich die Gewichtsprozente zu 100,0 Gew.-% addieren und
wobei der Radius der Kern/Schale/Schale Teilchen im Bereich von 160 bis 260 nm liegt und
wobei die erste Schale eine Glasübergangstemperatur kleiner 30°C aufweist und folgende Bestandteile umfasst:

E) 92,0 Gew.-% bis 98,0 Gew.-% (Meth)acrylat-Wiederholungseinheiten
F) 2,0 Gew.-% bis 8,0 Gew.-% styrolische Wiederholungseinheiten der allgemeinen Formel (I)

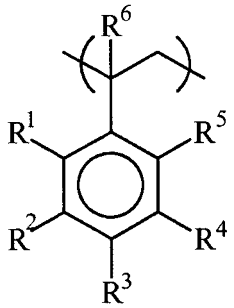

wobei die Reste $R^1$ bis $R^5$ jeweils unabhängig voneinander Wasserstoff, ein Halogen, eine $C_{1-6}$-Alkylgruppe oder eine $C_{2-6}$-Alkenylgruppe bezeichnen und der Rest $R^6$ Wasserstoff oder eine Alkylgruppe mit 1 bis 6 Kohlenstoffatomen ist, und wobei sich die Komponenten E) und F) in Summe zu 100 Gew. % addieren und wobei die Polymermischung noch übliche Zusatz, Hilfs- und/oder Füllstoffe enthalten kann und wobei ein aus der Polymermischung hergestellter Probekörper gleichzeitig folgende Eigenschaften aufweist:

- ein Zugmodul (ISO 527) von mindestens 2.500 MPa,
- eine Vicaterweichungstemperatur VET (ISO 306-B50) von mindestens 110°C,
- eine Schlagzähigkeit SZ (ISO 179, edgewise) von mindestens 30 $KJ/m^2$, und
- einen Schmelzindex MVR (ISO 1133, 230 °C / 3,8 kg) von mindestens 1,0 $cm^3/10$ min.

**2.** Polymermischung nach Anspruch 1, **dadurch gekennzeichnet, dass** die Komponente a.) ein Copolymer aus

| | |
|---|---|
| 50 Gew.-%. bis 80 Gew.-% | Methylmethacrylat, |
| 10 Gew.-%. bis 20 Gew.-% | Styrol und |
| 5 Gew.-%. bis 15 Gew.-% | Maleinsäureanhydrid ist. |

**3.** Polymermischung nach Anspruch 1 oder 2, das die Komponente b) einen Kern, eine erste Schale und eine zweite Schale aufweist, **dadurch gekennzeichnet, dass** :

der Kern, bezogen auf sein Gesamtgewicht, mindestens 75,0 Gew.-% (Meth)acrylat-Wiederholungseinheiten umfasst;
die zweite Schale, bezogen auf ihr Gesamtgewicht, mindestens 75,0 Gew.-% (Meth)acrylat-Wiederholungseinheiten umfasst;
und
der Radius des Kern-Schale-Teilchens inklusive der zweiten Schale, gemessen nach dem Coulter-Verfahren, im Bereich von größer 160,0 bis 250,0 nm liegt.

**4.** Polymermischung nach einem oder mehreren der Ansprüche 1 bis 3, **dadurch gekennzeichnet, dass** die Komponente c) ein Copolymer aus Methylmethacrylat, Styrol und Maleinsäureanhydrid ist.

5. Polymermischung nach Anspruch 4, **dadurch gekennzeichnet, dass** die Komponente c) ein Copolymer aus

| | |
|---|---|
| 50 Gew.-%. bis 80 Gew.-% | Methylmethacrylat, |
| 10 Gew.-%. bis 20 Gew.-% | Styrol und |
| 5 Gew.-%. bis 15 Gew.-% | Maleinsäureanhydrid ist. |

6. Polymermischung nach einem oder mehreren der Ansprüche 1 bis 5, **dadurch gekennzeichnet, dass** die Komponente d.) ein Copolymer aus 90 bis 99,5 Gew.-% Methylmethacrylat und 0,5 Gew.-%. bis 10 Gew.-% eines C1- bis C4-Alkylacrylaten ist.

7. Polymermischung nach Anspruch 6, **dadurch gekennzeichnet, dass** die Komponente d.) ein Copolymer aus 95 Gew.-%. bis 99,5 Gew.-% Methylmethacrylat und 0,5 Gew.-%. bis 5 Gew.-% Methylacrylat ist.

8. Polymermischung nach einem oder mehreren der Ansprüche 1 bis 7, **dadurch gekennzeichnet, dass** als Hilfsstoff ein Gleitmittel enthalten ist.

9. Polymermischung nach Anspruch 8, **dadurch gekennzeichnet, dass** als Formtrennmittel Stearylalkohol enthalten ist.

10. Spritzgegossener Formkörper, bestehend aus einer Polymermischung nach einem oder mehreren der Ansprüche 1 bis 9.

11. Verwendung einer Polymermischung nach einem oder mehreren der Ansprüche 1 bis 10 zur Herstellung von spritzgegossenen Formkörpern, die folgende Eigenschaften aufweisen:

I. ein Zugmodul (ISO 527) von mindestens 2.500 MPa,
II. eine Vicaterweichungstemperatur VET (ISO 306-B50) von mindestens 110 °C,
III. eine Schlagzähigkeit (ISO 179-2D, flatwise) von mindestens 30 $KJ/m^2$, und
IV. einen Schmelzindex MVR (ISO 1133, 230 °C / 3,8 kg) von mindestens 1,0 $cm^3/10$ min.

12. Verwendung der spritzgegossenen Formkörper nach Anspruch 10 oder 11 als Teile von Haushaltsgeräten, Kommunikationsgeräten, Hobby- oder Sportgeräten, Karosserieteile oder Teile von Karosserieteilen im Automobil-, Schiffs- oder Flugzeugbau.

## Claims

1. Polymer mixture, which comprises the following components:

a. a low-molecular-weight (meth)acrylate (co)polymer, composed of methyl methacrylate, styrene and maleic anhydride
**characterized by** a solution viscosity in chloroform at 25°C (ISO 1628 - Part 6) smaller than or equal to 55 ml/g
b. an impact modifier based on crosslinked poly(meth)acrylates
c. a relatively high-molecular-weight (meth)acrylate (co)polymer,
**characterized by** a solution viscosity in chloroform at 25°C (ISO 1628 - Part 6) greater than or equal to 65 ml/g and/or
d. a (meth) acrylate (co) polymer other than a), composed of from 80% by weight to 100% by weight of methyl methacrylate units polymerized by a free-radical route and from 0% by weight to 20% by weight of C1- to C4-alkyl acrylates, each % by weight being based on the entire composition of d.,
**characterized by** a solution viscosity in chloroform at 25°C (ISO 1628 - Part 6) of from 50 to 55 ml/g

where each of the components a.), b.), c.) and/or d.) can be treated as individual polymer or else as a mixture of polymers,
where the components are present in the following quantitative proportions

a.) from 25% by weight to 75% by weight

b.) from 7% by weight to 60% by weight
c.) and/or d.) from 10% by weight to 50% by weight

where a.), b.), c.) and/or d.) give a total of 100% by weight, where component b.) has a core/shell/shell structure and where, in each case based on its total weight, the core makes up from 5.0 to 50.0% by weight, the first shell makes up from 20.0 to 75.0% by weight and the second shell makes up from 5.0 to 50.0% by weight, where the percentages by weight give a total of 100.0% by weight and where the radius of the core/shell/shell particles is in the range from 160 to 260 nm and where the first shell has a glass transition temperature below 30°C and encompasses the following constituents:

E) from 92.0% by weight to 98.0% by weight of (meth)acrylate repeat units
F) from 2.0 % by weight to 8.0% by weight of styrenic repeat units of the general formula (I)

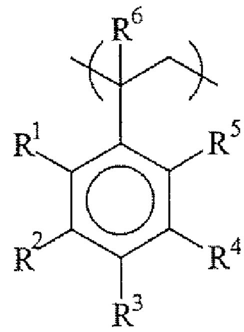

where each of the radicals $R^1$ to $R^5$, independently of the others, is hydrogen, a halogen, a $C_{1-6}$-alkyl group or a $C_{2-6}$-alkenyl group and the radical $R^6$ is hydrogen or an alkyl group having from 1 to 6 carbon atoms, and where components E) and F) give a total of 100% by weight and where the polymer mixture can also comprise conventional additives, conventional auxiliaries and/or conventional fillers and where a test specimen produced from the polymer mixture simultaneously has the following properties:

➢ a tensile modulus (ISO 527) of at least 2 500 MPa,
➢ a Vicat softening point VSP (ISO 306-B50) of at least 110°C,
➢ an impact resistance IR (ISO 179, edgewise) of at least 30 kJ/$m^2$, and
➢ a melt index MVR (ISO 1133, 230°C/3.8 kg) of at least 1.0 $cm^3$/10 min.

**2.** Polymer mixture according to Claim 1, **characterized in that** component a.) is a copolymer composed of from 50% by weight to 80% by weight of methyl methacrylate, from 10% by weight to 20% by weight of styrene and from 5% by weight to 15% by weight of maleic anhydride.

**3.** Polymer mixture according to Claim 1 or 2, where component b) has a core, a first shell and a second shell, **characterized in that**:

the core encompasses, based on its total weight, at least 75.0% by weight of (meth)acrylate repeat units;
the second shell encompasses, based on its total weight, at least 75.0% by weight of (meth)acrylate repeat units;

and
the radius of the core-shell particle, inclusive of the second shell, measured by the Coulter method, is in the range from greater than 160.0 to 250.0 nm.

**4.** Polymer mixture according to one or more of Claims 1 to 3, **characterized in that** component c) is a copolymer composed of methyl methacrylate, styrene and maleic anhydride.

**5.** Polymer mixture according to Claim 4, **characterized in that** component c) is a copolymer composed of from 50% by weight to 80% by weight of methyl methacrylate, from 10% by weight to 20% by weight of styrene and from 5% by weight to 15% by weight of maleic anhydride.

**6.** Polymer mixture according to one or more of Claims 1 to 5, **characterized in that** component d.) is a copolymer composed of from 90 to 99.5% by weight of methyl methacrylate and from 0.5% by weight to 10% by weight of a C1- to C4-alkyl acrylate.

**7.** Polymer mixture according to Claim 6, **characterized in that** component d.) is a copolymer composed of from 95% by weight to 99.5% by weight of methyl methacrylate and from 0.5% by weight to 5% by weight of methyl acrylate.

**8.** Polymer mixture according to one or more of Claims 1 to 7, **characterized in that** a lubricant is present as auxiliary.

**9.** Polymer mixture according to Claim 8, **characterized in that** stearyl alcohol is present as mould-release agent.

**10.** Injection moulding, composed of a polymer mixture according to one or more of Claims 1 to 9.

**11.** Use of a polymer mixture according to one or more of Claims 1 to 10 for production of injection mouldings which have the following properties:

I. a tensile modulus (ISO 527) of at least 2 500 MPa,
II. a Vicat softening point VSP (ISO 306-B50) of at least 110°C,
III. an impact resistance (ISO 179-2D, flatwise) of at least 30 $kJ/m^2$, and
IV. a melt index MVR (ISO 1133, 230°C/3.8 kg) of at least 1.0 $cm^3/10$ min.

**12.** Use of the injection mouldings according to Claim 10 or 11 as parts of household equipment, of communication equipment, of hobby equipment or of sports equipment, or as bodywork parts or as parts of bodywork parts in automobile construction, shipbuilding or aircraft construction.

## Revendications

**1.** Mélange de polymères, contenant les composants suivants :

a. un (co)polymère de (méth)acrylate de faible poids moléculaire, composé de méthacrylate de méthyle, de styrène et d'anhydride de l'acide maléique,
**caractérisé par** une viscosité en solution dans du chloroforme à 25 °C (ISO 1628 - partie 6) inférieure ou égale à 55 ml/g,
b. un agent de modification de la résistance aux impacts à base de poly(méth)acrylates réticulés,
c. un (co)polymère de (méth)acrylate de poids moléculaire élevé,
**caractérisé par** une viscosité en solution dans du chloroforme à 25 °C (ISO 1628 - partie 6) supérieure ou égale à 65 ml/g, et/ou
d. un (co)polymère de (méth)acrylate différent de a), constitué par 80 % en poids à 100 % en poids d'unités méthacrylate de méthyle polymérisées par voie radicalaire et 0 % en poids à 20 % en poids d'acrylates d'alkyle en C1 à C4, les % en poids se rapportant à chaque fois à la masse totale de d.,

**caractérisé par** une viscosité en solution dans du chloroforme à 25 °C (ISO 1628 - partie 6) de 50 à 55 ml/g,
les composants a.), b.), c.) et/ou d.) pouvant à chaque fois être compris aussi bien isolément sous la forme de polymères individuels que sous la forme de mélanges de polymères,
les composants étant présents en les proportions suivantes :

a.) 25 % en poids à 75 % en poids,
b.) 7 % en poids à 60 % en poids,
c.) et/ou d.) 10 % en poids à 50 % en poids,

a.), b.), c.) et/ou d.) s'additionnant pour atteindre 100 % en poids,
le composant b.) présentant une structure noyau/enveloppe/enveloppe et, à chaque fois par rapport à son poids total,
le noyau représentant 5,0 à 50,0 % en poids,
la première enveloppe représentant 20,0 à 75,0 % en poids et
la seconde enveloppe représentant 5,0 à 50,0 % en poids,
les pourcentages en poids s'additionnant pour atteindre 100,0 % en poids, et
le rayon des particules noyau/enveloppe/enveloppe se situant dans la plage allant de 160 à 260 nm et

la première enveloppe présentant une température de transition vitreuse inférieure à 30 °C et comprenant les constituants suivants :

E) 92,0 % en poids à 98,0 % en poids d'unités de répétition (méth)acrylate,
F) 2,0 % en poids à 8,0 % en poids d'unités de répétition styréniques de formule générale (I)

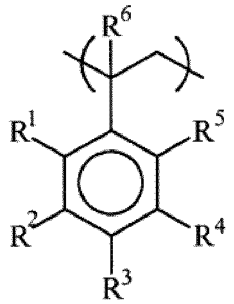

dans laquelle les radicaux $R^1$ à $R^5$ représentent à chaque fois indépendamment les uns des autres l'hydrogène, un halogène, un groupe alkyle en $C_{1-6}$ ou un groupe alcényle en $C_{2-6}$, et le radical $R^6$ représente l'hydrogène ou un groupe alkyle de 1 à 6 atomes de carbone,
et les composants E) et F) s'additionnant pour atteindre 100 % en poids,
et le mélange de polymères pouvant encore contenir des additifs, adjuvants et/ou charges usuels, et une éprouvette fabriquée à partir du mélange de polymères présentant simultanément les propriétés suivantes :

- un module de traction (ISO 527) d'au moins 2 500 MPa,
- une température de ramollissement de Vicat VET (ISO 306-B50) d'au moins 110 °C,
- une résistance aux impacts SZ (ISO 179, edgewise) d'au moins 30 $KJ/m^2$ et
- un indice de fluidité MVR (ISO 1133, 230 °C/3,8 kg) d'au moins 1,0 $cm^3$/10 min.

**2.** Mélange de polymères selon la revendication 1, **caractérisé en ce que** le composant a.) est un copolymère de :

50 % en poids à 80 % en poids de méthacrylate de méthyle,
10 % en poids à 20 % en poids de styrène et
5 % en poids à 15 % en poids d'anhydride de l'acide maléique.

**3.** Mélange de polymères selon la revendication 1 ou 2, dans lequel le composant b) comprend un noyau, une première enveloppe et une seconde enveloppe, **caractérisé en ce que** :

le noyau, par rapport à son poids total, comprend au moins 75,0 % en poids d'unités de répétition (méth)acrylate ;
la seconde enveloppe, par rapport à son poids total, comprend au moins 75,0 % en poids d'unités de répétition (méth)acrylate ; et
le rayon de la particule noyau-enveloppe y compris la seconde enveloppe, mesuré par le procédé Coulter, se situant dans la plage allant de plus de 160,0 à 250,0 nm.

**4.** Mélange de polymères selon une ou plusieurs des revendications 1 à 3, **caractérisé en ce que** le composant c) est un copolymère de méthacrylate de méthyle, de styrène et d'anhydride de l'acide maléique.

**5.** Mélange de polymères selon la revendication 4, **caractérisé en ce que** le composant c) est un copolymère de :

50 % en poids à 80 % en poids de méthacrylate de méthyle,
10 % en poids à 20 % en poids de styrène et
5 % en poids à 15 % en poids d'anhydride de l'acide maléique.

**6.** Mélange de polymères selon une ou plusieurs des revendications 1 à 5, **caractérisé en ce que** le composant d.) est un copolymère de 90 à 99,5 % en poids de méthacrylate de méthyle et 0,5 % en poids à 10 % en poids d'un acrylate d'alkyle en C1 à C4.

**7.** Mélange de polymères selon la revendication 6, **caractérisé en ce que** le composant d.) est un copolymère de 95

% en poids à 99,5 % en poids de méthacrylate de méthyle et 0,5 % en poids à 5 % en poids d'acrylate de méthyle.

**8.** Mélange de polymères selon une ou plusieurs des revendications 1 à 7, **caractérisé en ce qu'**un lubrifiant est contenu en tant qu'adjuvant.

**9.** Mélange de polymères selon la revendication 8, **caractérisé en ce que** de l'alcool stéarylique est contenu en tant qu'agent démoulant.

**10.** Corps moulé par injection, constitué par un mélange de polymères selon une ou plusieurs des revendications 1 à 9.

**11.** Utilisation d'un mélange de polymères selon une ou plusieurs des revendications 1 à 10 pour la fabrication de corps moulés par injection, qui présentent les propriétés suivantes :

I. un module de traction (ISO 527) d'au moins 2 500 MPa,
II. une température de ramollissement de Vicat VET (ISO 306-B50) d'au moins 110 °C,
III. une résistance aux impacts (ISO 179-2D, flatwise) d'au moins 30 $KJ/m^2$ et
IV. un indice de fluidité MVR (ISO 1133, 230 °C/3,8 kg) d'au moins 1,0 $cm^3$/10 min.

**12.** Utilisation des corps moulés par injection selon la revendication 10 ou 11 en tant que parties d'appareils ménagers, d'appareils de communication, d'appareils de loisirs ou de sport, parties de carrosserie ou parties de parties de carrosserie dans la construction d'automobile, de bateaux ou d'avions.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 264590 A
- JP 60147417 A
- DE OS4440219 A
- EP 0113924 A
- EP 0522351 A
- EP 0465049 A
- EP 0683028 A
- US 3793402 A
- DE 3343766
- DE 3210891
- DE 2850105
- DE 2742178
- DE 3701579
- DE 2750682 A1
- US 4110843 A


### In der Beschreibung aufgeführte Nicht-Patentliteratur


- **H. F. MARK et al.** Encyclopedia of Polymer Science and Engineering. J. Wiley, 1989, vol. 10, 1 ff
- **FOX T. G.** *Bull. Am. Physics Soc.,* 1956, vol. 1 (3), 123
- Polymer Handbook. J. Wiley & Sons, 1975
- *Nachr. Chem. Tech. Lab.,* 1995, vol. 43, 553-566
- **H. RAUCH-PUNTIGAM ; TH. VÖLKER.** Acryl- und Methacrylverbindungen. Springer, 1967
- **KIRK-OTHMER.** Encyclopedia of Chemical Technology. J. Wiley, 1978, vol. 1, 386ff
- **HOUBEN-WEYL.** Methoden der organischen Chemi. Georg Thieme, 1961, vol. XIV/1, 66
- **KIRK-OTHMER.** Encyclopedia of Chemical Technology. J. Wiley, 1978, vol. 1, 296ff
- **B. H. F. MARK et al.** Encyclopedia of Polymer Science and Engineering. J. Wiley, 1989, vol. 10, 1 ff